# EUROPEAN PATENT APPLICATION

(11) **EP 4 455 523 A1**
(43) Date of publication of application: **30.10.2024**
(21) Application number: 23169997.6
(22) Date of filing: 26.04.2023
(51) Int. Cl.: F16K 37/00, F16K 31/50, F16K 31/53, F16K 31/05, F16K 1/52, F16K 35/02, F16K 35/06, F24D 19/10, G05D 7/01

(54) **A VALVE ARRANGEMENT WITH IMPROVED BALANCING FUNCTIONALITY**

(71) Applicant: IMI Hydronic Engineering International SA, 1262 Eysins (CH)
(72) Inventor: VOLOVEC, Peter, 8258 Kapele (SI)
(74) Representative: Zacco Sweden AB

(57) **Abstract**

A valve arrangement (100, 200) for controlling fluid flow, comprising: a valve body (110) having a valve inlet (111) and a valve outlet (112); a control valve part (150) comprising a seat (113) and closing member (151) movable relative to the seat (113) for enabling a variable cross section of a passage (102) between the valve inlet (111) and the valve outlet (112) to be changed; a restriction element (121) adjustable between different positions along or around a first axis (A1), wherein the different positions restrict movement of the closing member (151) by respective amounts; and an adjustment member (130) rotatably attached to the valve body (110), wherein the adjustment member (130) is rotatable around a second axis (A2) different from the first axis (A1), and wherein the adjustment member (130) is configured to transmit rotational movement of the adjustment member (130) to the restriction element (121) such that the restriction element (121) moves between the positions along or around the first axis (A1) when the adjustment member (130) is rotated.

## Description

### TECHNICAL FIELD

The present disclosure relates to a valve arrangement for controlling a fluid flow. The present disclosure also relates to a fluid distribution system comprising such a valve arrangement.

### BACKGROUND

Fluid distribution systems for, e.g., heating, cooling, and water supply are designed to feed a fluid from a source to a consumption point. Each consumption point typically has a calculated and designed flow or differential pressure requirement. However, depending on the type of hydronic system, the flow requirement is often variable over time and can change with factors like seasonality (e.g. summer or winter), that changes the load from the consumption points, temperature changes of the system fluid, changes in consumption of the system fluid (e.g. for drinking water).

Control valves are frequently used in fluid distribution systems and have a variable opening such that the flow rates can be controlled. Control valves may additionally be provided with a balancing function. To balance the fluid distribution system, a setting wheel of the valve may be turned for presetting a maximum opening of the valve, i.e. a maximum flow through the valve. In an example linear valve having a valve seat with which a movable valve plug is cooperateable, a restriction element coupled to the setting wheel will limit how far from the valve seat the valve disc is allowed to move. Other means than the setting wheel for balancing the valve are also possible. The restriction element is adjustable between different positions, where the different positions restrict movement of the movable valve disc. Rotary valves may also be provided with the balancing function, where rotational movement of a closing member is limited by the restriction element.

Typically, valves need to be pre-set to ensure proper system balance, but this can be a time-consuming and costly process in large buildings with thousands of valves. While the balancing function provided by existing balancing and control valves is beneficial for obtaining desired flows in, for instance, different parts of a building, they have the drawback that the setting wheel is difficult to turn after installment of the balancing and control valve.

### SUMMARY

An object of the present disclosure is to provide a valve arrangement having a balancing function which alleviates the above mentioned drawbacks of existing valve arrangements. This and other objects, which will become apparent in the following, are accomplished by a valve arrangement and a fluid distribution system as defined in the accompanying independent claims.

The present inventive concept is based on the insight that the restriction element for presetting maximum flow through a valve arrangement can be adjusted by an axially offset adjustment member, thereby improving accessibility and facilitating subsequent positional adjustments of the restriction element even after the valve arrangement has been installed.

According to a first aspect of the present disclosure, there is provided a valve arrangement for controlling fluid flow. The valve arrangement comprises: a valve body having a valve inlet and a valve outlet; a control valve part comprising a seat and closing member movable relative to the seat for enabling a variable cross section of a passage between the valve inlet and the valve outlet to be changed; and a restriction element adjustable between different positions along or around a first axis, where the different positions restrict movement of the closing member by respective amounts. The valve arrangement further comprises an adjustment member rotatably attached to the valve body, where the adjustment member is rotatable around a second axis different from the first axis. The adjustment member is configured to transmit rotational movement of the adjustment member to the restriction element such that the restriction element moves between the positions along or around the first axis when the adjustment member is rotated.

The adjustment member provides means to adjust the restriction element between its different positions at an engagement location that is offset from the restriction element itself, which is desired. As mentioned, in known valve arrangements, it is typically difficult to access means for balancing the valve arrangement after the valve arrangement has been installed. Consequently, the valve arrangement disclosed herein enables a simplified commissioning of the valve arrangement and a simplified maintenance of a fluid distribution system comprising the disclosed valve arrangement. This saves valuable time and resources during commissioning and maintenance, while also ensuring that the fluid distribution system is properly balanced and is functioning efficiently.

As an example, the closing member may be connected to an actuating spindle passing through the valve body. Such an actuating spindle may be actuated by hand, but is most often actuated by an actuator. The restriction element may in that case be configured to restrict movement of the closing member via the actuating spindle. In a known valve arrangement, when the actuator is installed on the valve arrangement, access to means for adjusting the restriction element between its different positions may be limited by the position of the actuator. During commissioning of several valve arrangements, the actuators may be screwed onto the valves and be configured by system integrators and electricians. However, if a commissioning team responsible for balancing the system arrives after the actuators are mounted, they must dismount each actuator, adjust the position of the restriction element, and thereafter remount the actuators. Additionally, there may be instances where an initial pre-setting of the position of the restriction element is unsatisfactory for one or more valve arrangements of the several valve arrangements, requiring a re-setting of the one or more valves. The valve arrangement of the present disclosure, however, does not require dismounting the actuator because of the provision of the offset adjustment member.

The valve outlet is arranged downstream of the valve inlet. The valve arrangement is arranged to control a fluid flow between the valve inlet and the valve outlet. The control of fluid flow is provided by the control valve part, which may, e.g., be a linear valve or a rotary valve. Other types of valves are also possible.

If the control valve part is a linear valve, the closing member may move between different positions relative to the seat such that the variable cross section of the passage between the valve inlet and the valve outlet is changed. In other words, as the closing member moves closer to the seat, the amount of fluid flowing through the valve arrangement decreases. As the closing member moves away from the seat, the amount of fluid flowing through the valve arrangement increases. The closing member may be movable in a linear direction along the first axis. As mentioned, the closing member may be connected to an actuating spindle passing through the valve body. Such an actuating spindle may also be called a shaft. The actuating spindle may be actuated in a linear direction along the first axis. Furthermore, the actuating spindle may extend along the first axis.

The closing member may have a position in which the control valve part is considered as fully open, i.e. providing for a largest defined opening area through the valve arrangement. Similarly, the closing member may have a position in which the control valve part is considered as fully closed, i.e. completely blocking fluid from flowing through the valve arrangement. The opening degree of the control valve part may, in at least some exemplary embodiments, be controlled in a step-less manner. However, in at least some other exemplary embodiments, the opening degree may be discretely controlled in steps between the fully closed position and the fully opened position.

The adjustment member is a separate part from the restriction element. The adjustment member may e.g. be in the form of a disc or a wheel (such as a gear wheel). Other shapes are also possible.

The restriction element may have a position in which the movement of the closing member is not restricted, e.g. where the closing member can be moved between the fully closed position and the fully opened position. Furthermore, the restriction element may be configured such that, for all different positions of the restriction element, the closing member may be positioned in the fully closed position, but is movable away from the fully closed position to different degrees. In that case, the different positions of the restriction element limits how much the control valve part can be opened relative to its fully closed position. In other words, the position of the restriction element presets a maximum opening of the valve arrangement, i.e. a maximum flow through the valve arrangement. The restriction element thus provides the balancing function previously mentioned herein. For a linear valve, the restriction element may limit the amount the closing member may be lifted from the closed position. Consequently, the restriction element may also be called a lift limiter when the control valve part is a linear valve. Setting the restriction element in any of its position may be called presetting the restriction element, presetting the valve arrangement, and/or balancing the valve arrangement.

According to a least one exemplary embodiment, the adjustment member constitutes first means of adjusting the restriction element between its different positions, where the valve arrangement is provided with second means of adjusting the restriction element between its different positions. For example, the second means may comprise a handle provided on the restriction element, where the handle is configured to rotate around the first axis such that the restriction element moves between the positions along or around the first axis when the handle is rotated. In other words, the handle is a part of the restriction element. The handle may be configured to be rotated manually by a person, e.g. during the installment of the valve arrangement. When the handle is rotated, the restriction element moves between its different positions.

The handle may be arranged in a first plane and the adjustment member may be arranged in a second plane different from the first plane. The first plane is perpendicular to the first axis. As the handle is configured to rotate around the first axis, the handle is arranged to rotate along the first plane. Similarly, the second plane is perpendicular to the second axis. As the adjustment member is configured to rotate around the second axis, the adjustment member is arranged to rotate along the second plane. If the first and the second axes are parallel, the first plane may be offset from the second plane with respect to the direction along the first or the second axis. By having the second plane offset from the first plane, accessibility of adjusting the restriction element is improved. For example, if the valve arrangement is mounted close to the ceiling, near a corner, or such, where space is limited, one of the first plane and the second plane may be hard to access.

If the valve arrangement comprises the actuating spindle according to the discussions above, the handle may be arranged to rotate around the actuating spindle.

According to a least one exemplary embodiment, the valve arrangement is connectable to an actuator for actuating the closing member. In particular, the valve arrangement is connectable to the actuator such that the first means are accessible for adjusting the restriction element and such that the actuator prevents access to the second means when the actuator is connected to the valve arrangement. In other words, if an actuator is installed on the valve arrangement for actuating the closing member (e.g. via the actuating spindle), the access to the handle is obstructed. In that case, it may only be possible to balance the valve arrangement by means of the handle when the actuator is not mounted to the valve arrangement. If the

As mentioned, the control valve part may be a linear valve, in which the closing member is configured to perform a linear or translational movement. Linear valves are easy to maintain, offer a wide range of pressure classes and sizes. Additionally, while a rotary valve is normally limited to a 90° stroke, the stroke length of a linear valve can be selected more freely, which may allow for a higher resolution and control accuracy, particularly at low flows. Thus, according to a least one exemplary embodiment, the closing member is movable in a linear direction along the first axis, where the restriction element is adjustable between different positions along the first axis, and where the different positions restrict movement of the closing member along the first axis by respective amounts.

As is also mentioned above, other types of valves are also possible. For instance, the control valve part may be a rotary valve, in which the closing member is configured to perform a rotating or pivoting movement, where the different positions of the restriction element may, e.g., be at a rotational position between fully closed and fully opened positions of the control valve part. Examples of such rotating valves are ball valves and butterfly valves. Rotary valves are also versatile with respect to pressure classes and sizes. A rotary valve is typically smaller than a linear valve, and is therefore typically more cost-effective.

According to a least one exemplary embodiment, the adjustment member comprises a first gear and the restriction element comprises a second gear, where the first and the second gears are intermeshed. As an example, a gear ratio from the first gear to the second gear is 1:1. Although other gear ratios are possible, a ratio of 1:1 strikes a good balance between the size of the adjustment member and the required torque to rotate the adjustment member.

Using intermeshed gears provides a reliably way of transmitting rotational movement of the adjustment member to move the restriction element between its different positions. As an example, the first gear comprises teeth arranged circumferentially around the adjustment member and the second gear comprises teeth arranged circumferentially around the restriction element.

Other transmission systems are also possible, such as a chain drive or belt drive.

According to a least one exemplary embodiment, the restriction element is rotatably mounted to the valve body and configured to simultaneously rotate around the first axis and move along the first axis. In that case, the adjustment member may be configured to transmit rotational movement of the adjustment member to rotational movement of the restriction element. The simultaneous rotational and linear movement may, e.g., be provided by a having the restriction element being attached to the valve body via a threaded connection.

According to a least one exemplary embodiment, restriction element comprises two parts: a first part and a second part. The first part of the restriction element is rotatably mounted to the valve body and is configured to be rotated when the adjustment member rotates. The first part is configured such that it does not move along the first axis when it is rotated. The first part may be called a setting wheel. The second part of the restriction element is rotatably mounted to the valve body and is configured to be rotated when first part rotates. When the second part rotates, it is configured such that it also moves either up or down along the first axis.

According to a least one exemplary embodiment, the first axis is parallel with the second axis. In this way, rotational movement of the adjustment member can efficiently be transmitted to rotational movement of the restriction element.

Other orientations of the second axis are also possible. For example, rotational movement of the adjustment member may be transmitted to linear movement of the restriction element via a rack-and-pinion mechanism, where the adjustment member forms the pinon and the restriction element comprises the rack. In that case, the second axis may be perpendicular to the first axis.

According to a least one exemplary embodiment, the adjustment member comprises a tool engagement part configured to be engaged by a tool configured to rotate the adjustment member. It is an advantage to have a tool for applying torque to the adjustment member. Alternatively, or in combination of, the adjustment member is provided with a grip (such a protrusion) that is configured to be grabbed onto by a hand, which also facilitates applying torque to the adjustment member.

According to a least one exemplary embodiment, the tool engagement part comprises a recess or a hole for engaging with the tool. A hole may advantageously provide access from two opposite sides, which facilitates balancing after the valve arrangement has been installed to a fluid distribution system.

If the tool engagement part comprises a recess or a hole, the tool engagement part may be configured to engage a tool with a shape complementary to that hole or recess. In particular, the tool engagement part may be a female part of a connection and the tool may comprise a male part of that connection.

According to a least one exemplary embodiment, the recess or the hole is shaped to engage a hex key. A hex key is also known as hex wrench, Allen key, and Allen wrench. Other shapes are also possible, such as star-shaped hole or recess.

Other types of tool engagement parts are also possible. For example, the tool engagement part may comprise a protrusion, such as a bolt head or similar. In particular, the tool engagement part may be a male part of a connection and the tool may comprise a female part of that connection.

According to a least one exemplary embodiment, the recess or the hole intersects the second axis. In this way, torque may easily be applied to the adjustment member via the tool. In general, the recess or the hole may be placed anywhere on the adjustment member.

According to a least one exemplary embodiment, the adjustment member is at least partly enclosed by a housing formed by the valve body, where the housing comprises an opening providing access to the tool engagement part. The housing may advantageously be arranged such that the adjustment member is rotatably attached to the housing in a way that the adjustment member can rotate around the second axis.

According to a least one exemplary embodiment, the adjustment member and the valve body comprise a digital display indicating the position of the restriction element. The digital display may, e.g., be a display formed by an opening in the housing and by digits, such as Arabic numerals, arranged on the adjustment member. As the adjustment member rotates, different digits appear in the opening in the housing that is part of the digital display. Other configurations to form the digital display by the valve body and the adjustment member are also possible.

The valve arrangement may comprise two separate digital displays formed by the adjustment member and the valve body. In that case, a first digital display may be formed by a first set of digits arranged on the adjustment member and a first opening in the housing, and the second digital display may be formed by a second set of digits arranged on the adjustment member and a second opening in the housing. The first digital display may be arranged in a first plane and the second digital display may be arranged in a second plane. Furthermore, the second plane may be angled with respect to the first plane. In particular, the first plane may be perpendicular to the second axis, and the second plane may be angled with respect to the first plane and with respect to the second axis. In this way, the position of the restriction element, as indicated by the first and the second digital displays, can be seen from a broad range of different viewing angles when looking at the valve arrangement.

According to a least one exemplary embodiment, the restriction element and the valve body comprise a digital display indicating the position of the restriction element. Such a digital display may, e.g., be a display formed by an opening in the valve body and by digits, such as Arabic numerals, arranged on the restriction element. As the restriction element rotates, different digits appears in the opening in the valve body that is part of the digital display. Other configurations to form the digital display by the valve body and the restriction element are also possible.

According to a second aspect of the present disclosure, there is provided a valve assembly comprising the valve arrangement according to the discussion above and an actuator connected to the valve arrangement such that the first means are accessible for adjusting the restriction element and such that the actuator prevents access to the second means.

According to a third aspect of the present disclosure, there is provided a fluid distribution system comprising a valve arrangement or the valve assembly according to the discussions above. The fluid distribution system is associated with the above-discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

With reference to the appended drawings, below follows a more detailed description of embodiments of the present disclosure cited as examples. In the drawings:
Figure 1 schematically illustrates a valve arrangement;
Figures 2A-2F show different views of an outside of an example valve arrangement;
Figures 3A-3C show different cuts of the example valve arrangement of Figures 2A-2F; and
Figure 4 illustrates a fluid distribution system.

### DETAILED DESCRIPTION OF THE DRAWINGS

The present disclosure is described more fully below with reference to the accompanying drawings, in which certain aspects of the present disclosure are shown. The present disclosure may, however, be embodied in many different forms and should not be construed as limited to the embodiments and aspects set forth herein; rather, these embodiments are provided by way of example so that this disclosure will be thorough and complete, and will fully convey the scope of the present disclosure to those skilled in the art. Like numbers refer to like elements throughout the description.

It is to be understood that the present disclosure is not limited to the embodiments described herein and illustrated in the drawings; rather, the skilled person will recognize that many changes and modifications may be made within the scope of the appended claims.

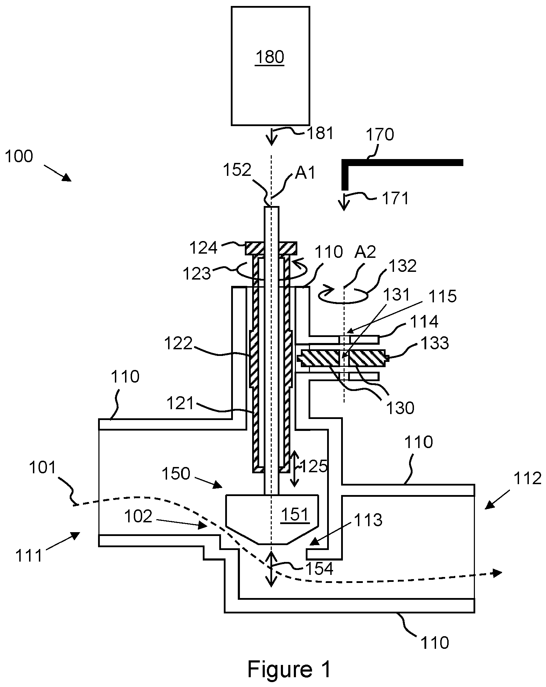

Figure 1 is a schematic illustration of a valve arrangement 100 for controlling fluid flow. The valve arrangement 100 comprises a valve body 110 having a valve inlet 111 and a valve outlet 112. The valve outlet 112 is arranged downstream of the valve inlet 111. The valve arrangement 100 is arranged to control a fluid flow between the valve inlet 111 and the valve outlet 112. Arrow 101 indicates a fluid path from the valve inlet 111 to the valve outlet 112. The control of fluid flow is provided by a control valve part 150, which forms a linear valve. The control valve part 150 comprises a seat 113 and closing member 151 movable relative to the seat 113. In particular, the closing member 151 is movable in a linear direction, which is illustrated by arrow 154. When the closing member 151 moves between different positions relative to the seat 113, a variable cross section of a passage 102 between the valve inlet 111 and the valve outlet 112 is changed. In other words, as the closing member 151 moves closer to the seat 113, the amount of fluid flowing through the valve arrangement 100 decreases. As the closing member 151 moves away from the seat 113, the amount of fluid flowing through the valve arrangement 100 increases. The closing member 151 has position in which the control valve part 150 is considered as fully open, i.e. providing for a largest defined opening area through the valve arrangement 100. Similarly, the closing member 151 has a position in which the control valve part 150 is considered as fully closed, i.e. completely blocking fluid from flowing through the valve arrangement 100 (or only allowing a small leakage flow). The opening degree of the control valve part may, in at least some exemplary embodiments, be controlled in a step-less manner. However, in at least some exemplary embodiments, the opening degree may be discretely controlled in steps between the fully closed position and the fully opened position.

The closing member 151 is connected to an actuating spindle 152 passing through the valve body 110. The actuating spindle 152 may also be called a shaft. The actuating spindle 152 may be actuated by hand or by an actuator 180 to move the closing member 151 in the linear direction 154. In other words, the valve arrangement 100 is connectable to the actuator 180 for actuating the closing member 151. In Figure 1, the actuator 180 is about to engage the valve arrangement 100, which is illustrated by arrow 181. Furthermore, the actuating spindle 152 extends along a first axis A1, which is coaxial with the linear movement 154 of the closing member 154.

The valve arrangement 100 and the actuator 180 together form a valve assembly.

The valve arrangement 100 in Figure 1 further comprises a restriction element 121. The restriction element 121 is adjustable between different positions along the first axis A1. The different positions restrict movement of the closing member 151 by respective amounts. The movement of the restriction element 121 is illustrated by arrow 125. The restriction element 121 has a position in which the movement of the closing member 151 is not restricted, where the closing member can be moved between the fully closed position and the fully opened position. In Figure 1, the restriction element 121 is in said position. When the restriction element 121 is moved downwards in the figure, the movement of the closing member 151 becomes restricted. The further down the restriction element 121 is positioned, the more the movement of the closing member 151 is restricted. For all different positions of the restriction element 121, the closing member 151 can be positioned in the fully closed position, but is movable upwards to different degrees. The different positions of the restriction element 121 thus limits how much the control valve part 150 can be opened relative to its fully closed position. In other words, the position of the restriction element 121 presets a maximum opening of the valve arrangement 100, i.e. a maximum flow through the valve arrangement 100. The restriction element 121 thus provides the balancing function previously mentioned herein. The restriction element 121 limits the amount the closing member 151 may be lifted from the closed position. Consequently, the restriction element 121 may also be called a lift limiter.

If the control valve part had been a rotary valve instead of a linear valve, the restriction element 121 would be adjustable between different positions around the first axis A1.

The restriction element 121 is rotatably mounted to the valve body 110 and configured to simultaneously rotate around the first axis A1 and move along the first axis A1. The rotational movement of the restriction element is illustrated by arrow 123. The simultaneous rotational and linear movement may, e.g., be provided by having the restriction element 121attached to the valve body 110 via a threaded connection. Furthermore, the restriction element 121 is provided with a handle 124. The handle 124 is configured to rotate around the first axis A1 such that the restriction element 121 moves between the positions along the first axis A1 when the handle 124 is rotated. The handle 124 is configured to be rotated manually by a person during the installment of the valve arrangement 100. When the handle is rotated, the restriction element 121 is rotated as well, and is consequently moved up or down along the first axis A1 depending on the rotational direction.

The handle 124 is arranged to rotate around the actuating spindle 152. As mentioned, the valve arrangement 100 is connectable to an actuator 180. In particular, the valve arrangement 100 is connectable to the actuator 180 such that the actuator 180 prevents access to the handle 124 when the actuator 180 is connected to the valve arrangement 100, i.e., a person is prevented from rotating the handle 124. In other words, when the actuator 180 is installed on the valve arrangement 100 for actuating the closing member 151 via the actuating spindle 152, the access to the handle 121 is obstructed. Consequently, with respect to the handle 124, it is only be possible to balance the valve arrangement 100 when the actuator 180 is not mounted to the valve arrangement 100. In most cases, balancing of the valve arrangement 100 is performed during installment of the valve arrangement. In that case, the actuator 180 can be mounted to the valve arrangement 100 after the balancing has been performed. However, if it is desired to adjust the balancing afterwards, e.g., after a couple of weeks after the installment of the valve arrangement 100, the actuator 180 must be detached from the valve arrangement 100 to access the handle 121. Such disassembly is undesired since it is a time-consuming and costly process, especially in large buildings with thousands of valves. Furthermore, during commissioning, the actuator 180 is screwed onto the valve arrangement 100 and is configured by system integrators and electricians. However, if a commissioning team responsible for balancing the system arrives after the actuator 180 is mounted, the commissioning team must dismount the actuator 180 if they would want to gain access to the handle 124 in order to adjust the position of the restriction element 121, and thereafter remount the actuator 180.

When developing the embodiments disclosed herein, it has been realized that the valve arrangement 100 may be provided with additional means of adjusting the restriction element 121 between its different positions. The valve arrangement 100 therefore comprises an adjustment member 130 rotatably attached to the valve body 110. The adjustment member 130 is a separate part from the restriction element 121, and the adjustment member 130 is in the form of a disc. The adjustment member 130 is rotatable around a second axis A2 different from the first axis A1. In addition, the first axis A1 is parallel with the second axis A2. The adjustment member 130 is configured to transmit rotational movement of the adjustment member 130 to the restriction element 121 such that the restriction element 121 moves between the positions along the first axis A1 when the adjustment member 130 is rotated. The rotational movement of the adjustment member 130 is indicated by arrow 132. The adjustment member 130 provides means to balance the valve arrangement 100 when the actuator 180 is mounted to the valve arrangement 100. In other words the valve arrangement 100 is connectable to the actuator 180 such that the adjustment member 130 is accessible and such that the actuator 180 prevents access to the handle when the actuator 180 is connected to the valve arrangement 100. Thus, the disclosed valve arrangement 100 enables a simplified commissioning of the valve arrangement 100 since a commissioning team responsible for balancing the system may balance the valve arrangement 100 after the actuator 180 is mounted to the valve arrangement 100. In addition, the disclosed valve arrangement 100 enables a simplified maintenance of a fluid distribution system comprising the disclosed valve arrangement 100 since the time-consuming process of detaching the actuator 180 when balancing the valve arrangement 100 after commissioning is not required.

The adjustment member 130 comprises a first gear 133 and the restriction element 121 comprises a second gear 122, where the first and the second gears 133, 122 are intermeshed. The gear ratio from the first gear 133 to the second gear 122 is 1:1. Although other gear ratios are possible, a ratio of 1:1 strikes a good balance between the size of the adjustment member 130 and the required torque to rotate the adjustment member 130.

As mentioned, the restriction element 121 is rotatably mounted to the valve body 110 and configured to simultaneously rotate around the first axis A1 and move along the first axis A1. The adjustment member 130 is configured to transmit rotational movement of the adjustment member 130 to rotational movement of the restriction element 121. Because of the intermeshed first and second gears 133, 122, when the adjustment member 130 is rotated, the restriction element 121 is rotated as well, and is consequently moved up or down along the first axis A1 depending on the rotational direction of the adjustment member 130. Note that the rotational direction of the restriction element 121 and of the adjustment member 130 are opposite to each other.

The adjustment member 130 further comprises a tool engagement part 131 configured to be engaged by a tool 170, where the tool 170 is configured to rotate the adjustment member 130. The tool engagement part comprises a hole 131 for engaging with the tool 170. The hole 131 is a through hole extending through adjustment member 130. The tool 170 in Figure 1 is a hex key and the hole 131 is shaped to engage the hex key. Furthermore, the hole 131 intersects the second axis A2. The hex key may be engaged with the hole by inserting an end of the hex key into the hole. This movement is illustrated by arrow 171.

As is further shown in Figure 1, the adjustment member 130 is partly enclosed by a housing 114 formed by the valve body 110. The housing 114 comprises an opening 115 providing access to the tool engagement part 131. The housing holds the adjustment member 130 in place such that it can rotate around the second axis A2 and such that the first gear 133 of the adjustment member 130 is intermeshed with the second gear 122 of the restriction element 121.

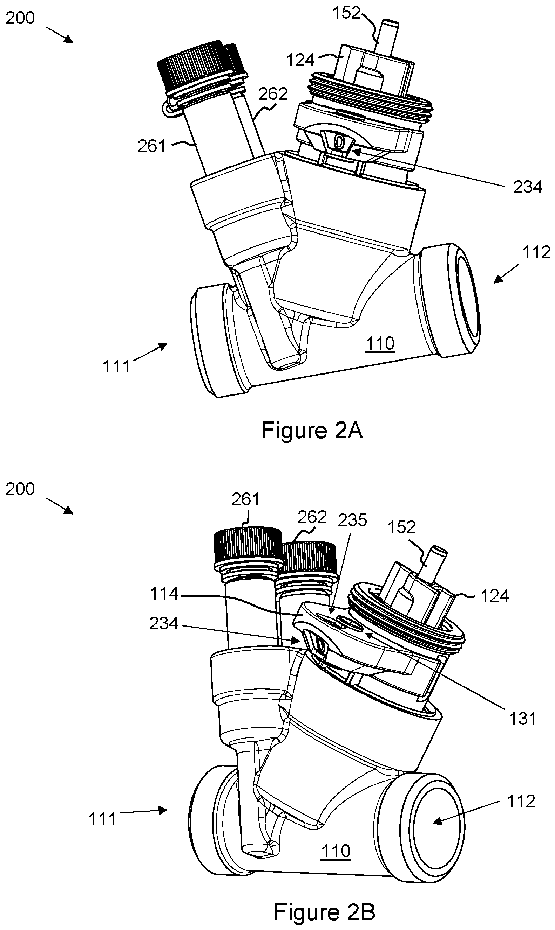

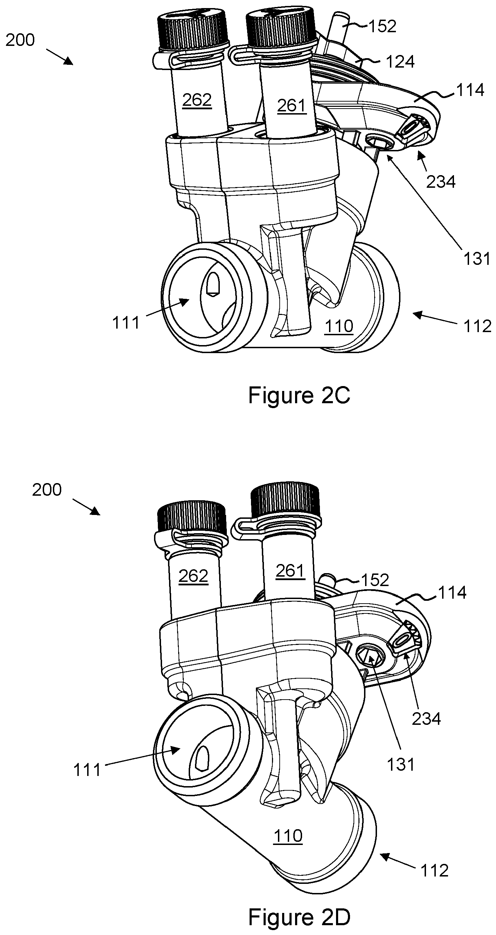

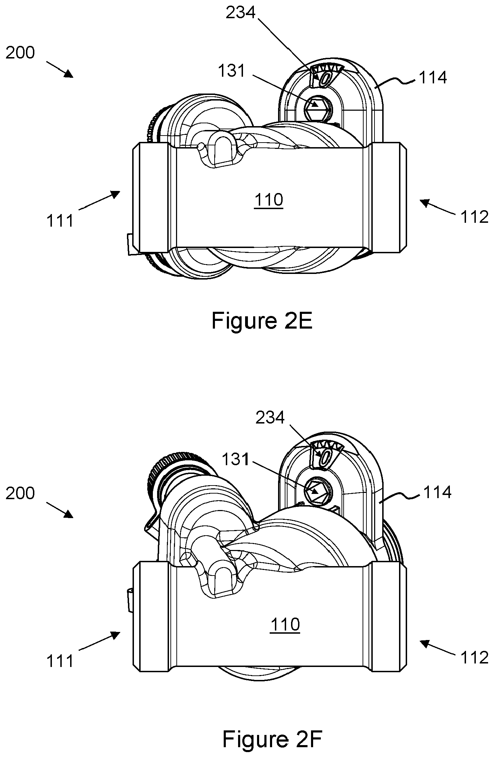

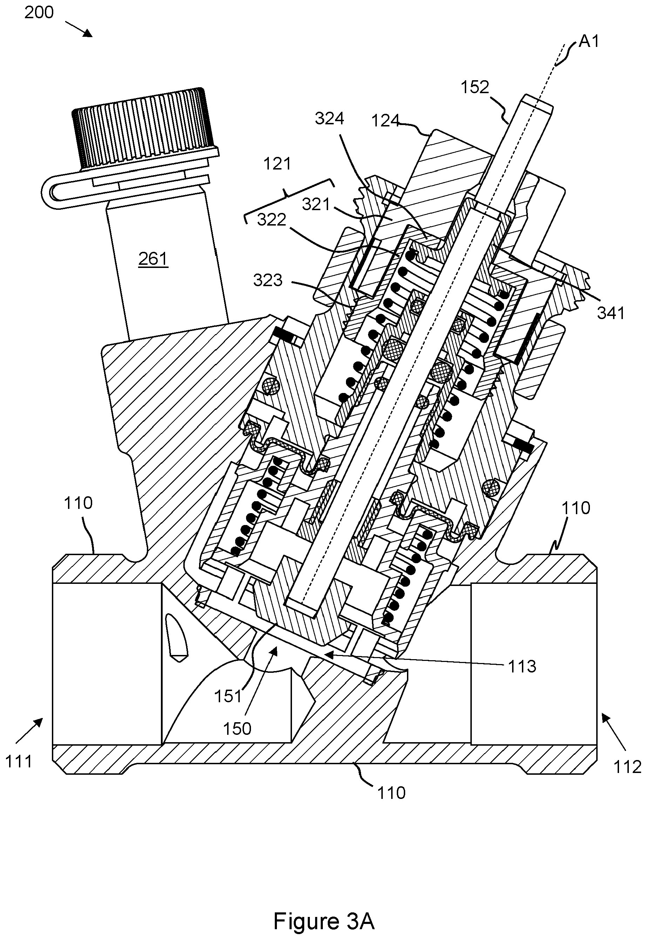

Figures 2A-2F and 3A-3C show different views of an example valve arrangement 200. In particular, Figures 2A-2F show different views of an outside of the example valve arrangement 200 and Figures 3A-3C show different cuts of the example valve arrangement 200. The example valve arrangement 200 in Figures 2A-2F and 3A-3C comprises the same features as schematically illustrated for the valve arrangement 100 in Figure 1.

It can be seen that the valve body 110 of the valve arrangement 200 is provided with two measuring connections 261, 262 for measuring pressure and/or temperature. Each measuring connection comprises a measuring channel for receiving a measuring device, such as e.g. a measuring probe.

In Figures 3A-3C, it can be seen that the restriction element 121 of the valve arrangement 200 comprises two parts, viz., a first part 321 and a second part 322. The first part 321 comprises the second gear 122, which is intermeshed with the first gear 133 of the adjustment member 130. The first part 321 of the restriction element 121 is rotatably mounted to the valve body and is configured to be rotated when the adjustment member 130 rotates. The first part 321 does not move along the first axis A1 when it is rotated. The first part 321 may be called a setting wheel. The second part 322 of the restriction element 121 is rotatably mounted to the valve body 110 and is configured to be rotated when first part 321 rotates. When the second part 322 rotates, it also moves either up or down along the first axis A1. Consequently, the restriction element 121 (comprising the first and the second parts 321, 322) is rotatably mounted to the valve body 110 and configured to simultaneously rotate around the first axis A1 and move along the first axis A1.

Furthermore, the handle 124 is integral with the first part 321 of the restriction element 121. The second part 322 of the restriction element 121 is provided with threads and is assembled to the valve body via threaded connection 323.

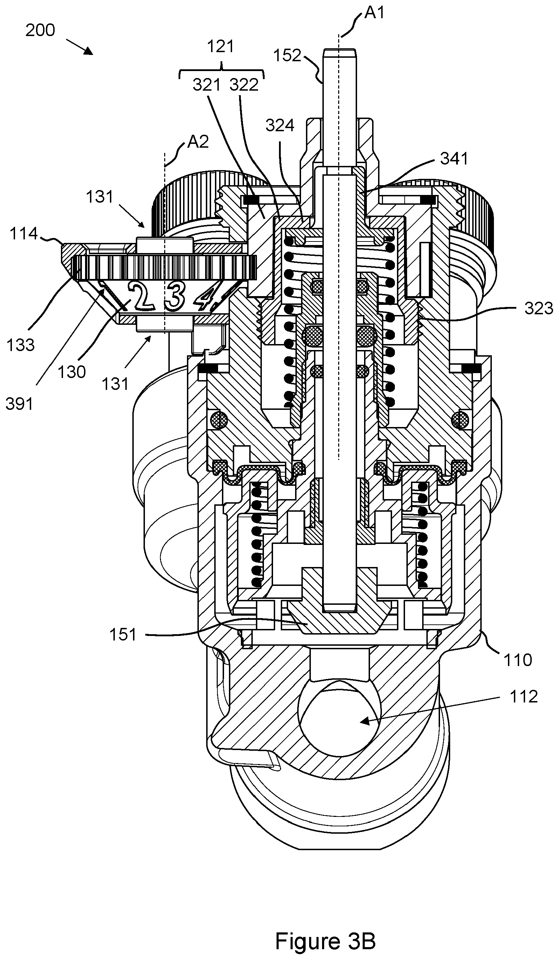

The second part 322 of the restriction element 121 comprises a shelf portion 324, which is arranged to limit an upper position (in Figures 3A-3C) of the actuating spindle 152 by interfacing a spindle part 341, which is locked to the actuating spindle 152 at least with respect to the direction along the first axis A1. When the adjustment member 130 is rotated, the first and the second parts 321, 322 of the restriction element 121 also rotates. The second part 322 additionally moves either up or down along the first axis A1 depending on the direction of the rotation. In Figure 3B, the second part 322 of the restriction element 121 may be moved downwards. In that case, the shelf portion 324 will lower an uppermost possible position of the spindle part 342, and consequently also an uppermost possible position of the closing member 151.

In the valve arrangement 200, the adjustment member 130 is in the form of a disc with a planar top surface and a conical bottom surface. The tool engagement part 131 comprises a recess provided in a hex nut, which is rotationally locked to the adjustment member 130 and extends through the adjustment member 130. The hex nut extends through an opening (115) of the housing 114 such that the adjustment member 130 is rotatably attached to the housing 114 in a way that the adjustment member 130 can rotate around the second axis A2. As can be seen in Figures 2A-2F and 3A-3C, the tool engagement part 131 can be engaged by the tool 170 from two opposite sides.

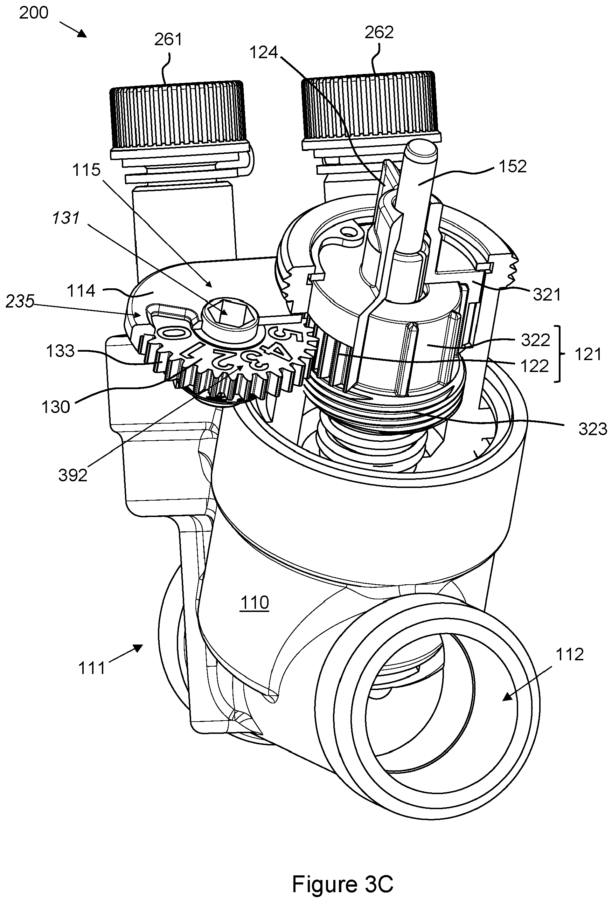

In the valve arrangement 200, the adjustment member 130 and the valve body 110 comprise two digital displays 234, 235 indicating the position of the restriction element 121. The first digital display 234 (as shown in e.g. Figure 2A) is a display formed by an opening in the housing 114 and by digits 391, in the form of Arabic numerals, arranged on the conical bottom surface of the adjustment member 130 (as shown in Figure 3B). As the adjustment member 130 rotates, different digits appears in the opening in the housing 114 that is part of the first digital display 234. The second digital display 235 (as shown in e.g. Figure 2B and 3C) is a display formed by a hole in the housing 114 and by digits 392, in the form of Arabic numerals, arranged on the planar top surface of the adjustment member 130 (as shown in Figure 3C). As the adjustment member 130 rotates, different digits appears in the opening in the housing 114 that is part of the second digital display 235.

It can be seen that the first digital display 234 is arranged in a first plane and that the second digital display 235 is arranged in a second plane, where the second plane is angled with respect to the first plane. In particular, the first plane is perpendicular to the second axis A2 and the second plane is angled with respect to the first plane and with respect to the second axis A2. In this way, the position of the restriction element 121, as indicated by the first and the second digital displays, can be seen from a broad range of different viewing angles when looking at the valve arrangement 200.

Although it is not shown in Figures 2A-2F and 3A-3C, the valve arrangement 200 may alternatively, or in combination of, be provided with a third digital display indicating the position of the restriction element 121, which is formed by the valve body 110 and by digits arranged on the restriction element 121.

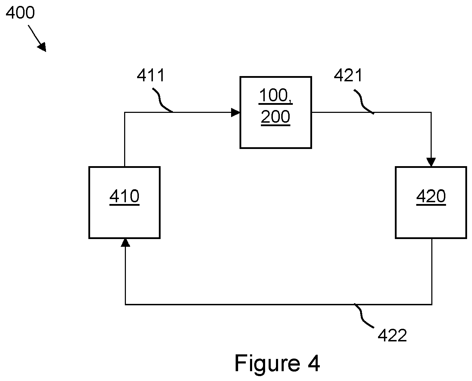

There is also disclosed herein a fluid distribution system 400 comprising a valve arrangement 100 or 200 according to the discussions above. Figure 4 shows a schematic illustration of an example fluid distribution system 400. More specifically, the fluid distribution system 400 of Figure 4 comprises a fluid source 410, such as a liquid tank, and fluid consumption point 420, such as a radiator. Relative to the valve arrangement 100/200, upstream 411 is between the valve arrangement 100/200 and the fluid source 410, and downstream 421 is between the valve arrangement 100/200 and the consumption point 420. Fluid is recirculated from the fluid consumption point 420 to the fluid source 410 via a return path 422.

## Claims

1. A valve arrangement (100, 200) for controlling fluid flow, comprising:
a valve body (110) having a valve inlet (111) and a valve outlet (112);
a control valve part (150) comprising a seat (113) and closing member (151) movable relative to the seat (113) for enabling a variable cross section of a passage (102) between the valve inlet (111) and the valve outlet (112) to be changed;
a restriction element (121) adjustable between different positions along or around a first axis (A1), wherein the different positions restrict movement of the closing member (151) by respective amounts; and
an adjustment member (130) rotatably attached to the valve body (110), wherein the adjustment member (130) is rotatable around a second axis (A2) different from the first axis (A1), and wherein the adjustment member (130) is configured to transmit rotational movement of the adjustment member (130) to the restriction element (121) such that the restriction element (121) moves between the positions along or around the first axis (A1) when the adjustment member (130) is rotated.

2. The valve arrangement (100, 200) according to claim 1, wherein the adjustment member (130) constitutes first means of adjusting the restriction element (121) between its different positions, and wherein the valve arrangement (100, 200) is provided with second means of adjusting the restriction element (121) between its different positions.

3. The valve arrangement (100, 200) according to claim 2, wherein the second means comprises a handle (124) provided on the restriction element (121), and wherein the handle (124) is configured to rotate around the first axis (A1) such that the restriction element (121) moves between the positions along or around the first axis (A1) when the handle (124) is rotated.

4. The valve arrangement (100, 200) according to claim 2 or 3, connectable to an actuator (180) for actuating the closing member (151), wherein the valve arrangement (100, 200) is connectable to the actuator (180) such that the first means are accessible for adjusting the restriction element (121) and such that the actuator (180) prevents access to the second means when the actuator (180) is connected to the valve arrangement (100, 200).

5. The valve arrangement (100, 200) according to any previous claim, wherein the closing member (151) is movable in a linear direction along the first axis (A1), and wherein the restriction element (121) is adjustable between different positions along the first axis (A1), and wherein the different positions restrict movement of the closing member (151) along the first axis (A1) by respective amounts.

6. The valve arrangement (100, 200) according to any previous claim, wherein the adjustment member (130) comprises a first gear (133) and the restriction element (121) comprises a second gear (122), and wherein the first and the second gears (133, 122) are intermeshed.

7. The valve arrangement (100, 200) according claim 5 or any previous claim when dependent on claim 5, wherein the restriction element (121) is rotatably mounted to the valve body (110) and configured to simultaneously rotate around the first axis (A1) and move along the first axis (A1), and wherein the adjustment member (130) is configured to transmit rotational movement of the adjustment member (130) to rotational movement of the restriction element (121).

8. The valve arrangement (100, 200) according to any previous claim, wherein the first axis (A1) is parallel with the second axis (A2).

9. The valve arrangement (100, 200) according to any previous claim, wherein the adjustment member (130) comprises a tool engagement part (131) configured to be engaged by a tool (170) configured to rotate the adjustment member (130).

10. The valve arrangement (100, 200) according to claim 9, wherein the tool engagement part comprises a recess or a hole (131) for engaging with the tool (170).

11. The valve arrangement (100, 200) according to any of claims 9-10, wherein the adjustment member (130) is at least partly enclosed by a housing (114) formed by the valve body (110), and wherein the housing (114) comprises an opening (115) providing access to the tool engagement part (131).

12. The valve arrangement (100, 200) according to any previous claim, wherein the restriction element (121) and the valve body (110) comprise a digital display indicating the position of the restriction element (121).

13. The valve arrangement (100, 200) according to any previous claim, wherein the adjustment member (130) and the valve body (110) comprise a digital display (234, 235) indicating the position of the restriction element (121).

14. A valve assembly comprising the valve arrangement (100, 200) according to claim 2 or any of claims 3-13 when dependent on claim 2 and an actuator (180) connected to the valve arrangement (100, 200) such that the first means are accessible for adjusting the restriction element (121) and such that the actuator (180) prevents access to the second means.

15. A fluid distribution system (400) comprising a valve arrangement (100, 200) according to any of claims 1-13 or the valve assembly according to claim 14.
